# FASCICULE DE BREVET EUROPEEN

(11) **EP 3 873 395 B1**
(45) Date de publication et mention de la délivrance du brevet: **07.06.2023**
(21) Numéro de dépôt: 19786400.2
(22) Date de dépôt: 07.10.2019
(51) Int. Cl.: A61G 17/04, F24F 5/00, F24F 6/00, A61G 17/02

(54) **CERCUEIL NOTAMMENT POUR L'INHUMATION EN PLEINE TERRE**
SARG, INSBESONDERE ZUM VERGRABEN IM BODEN
COFFIN IN PARTICULAR FOR BURIAL IN THE GROUND

(30) Priorité: 31.10.2018 FR 1871344
(43) Date de publication de la demande: 08.09.2021
(73) Titulaire: Hasnaoui, Mansour, 59450 Sin le Noble (FR)
(72) Inventeur: Hasnaoui, Mansour, 59450 Sin le Noble (FR)
(74) Mandataire: RVDB
(86) Numéro de dépôt international: PCT/IB2019/058523
(87) Numéro de publication internationale: WO 2020/089713

(56) Documents cités:
- WO-A2-2013/175518
- DE-A1- 10 116 113
- DE-A1- 19 926 579
- DE-A1- 19 948 782
- US-A- 5 659 933

## Description

### Domaine technique

L'invention se situe dans le domaine technique des pompes funèbres et plus particulièrement des techniques d'inhumation d'un cercueil en pleine terre et de conservation de ce dernier.

Cette application n'est toutefois pas limitative et le cercueil pourrait également être utilisé pour la garde du corps en caveau ou en chambre funéraire.

### Technique antérieure

A ce jour, les cercueils permettent la réception des corps et comprennent des moyens permettant d'accompagner la putréfaction des corps et notamment en permettant l'évacuation et le traitement des fluides corporels. Notamment, certains cercueils prévoient un matelas, sur lequel repose le corps, comprenant des matières absorbantes et filtrantes et notamment des matériaux à base de charbon actifs.

Ce matelas peut en outre être disposé à l'aplomb d'un réservoir permettant la collecte des fluides filtrés par le matelas et permettant d'éviter les fuites vers l'extérieur potentiellement polluante. Ce type de cercueil permet également de limiter la souillure du corps et dans une certaine mesure permet, en évacuant une partie des fluides, la décomposition du corps par des bactéries aérobies. Toutefois même en présence de matelas filtrant l'intérieur du cercueil est souvent placé dans des conditions soit trop humides et anaérobies conduisant à la saponification des lipides responsable de la formation d'adipocire empêchant la décomposition des corps soit trop sèches entraînant la momification du corps.

Il est à noter que le document de brevet DE10116113 décrit un cercueil de ce type.

Les cercueils ne prévoient pas à ce jour de dispositifs permettant d'accélérer la décomposition du corps dans des conditions comparables à un temps de décomposition naturelle à l'air libre. Actuellement la décomposition complète d'un corps compte tenu des structures de cercueil demande une durée supérieure à huit ans. Ce délai très long dépend de nombreux facteurs parmi lesquels l'herméticité du cercueil, les conditions climatiques ou encore les produits utilisés pour réaliser l'embaumement et contribuant à la préservation du corps tel que le formaldéhyde.

Ce délai très long pose de nombreux problèmes, notamment, pour les fossoyeurs, la décomposition incomplète du corps ou cadavre augmente considérablement les risques biologiques lors de la dépose des cercueils ou exhumation en vue de placer les os dans l'ossuaire, exhumation requise par la commune en fin de concession. En effet, en cas de décomposition incomplète le fossoyeur est mis en contact avec des germes pathogènes présent dans le corps ce qui peut provoquer de risques infectieux.

De plus sur le plan éthique la manipulation des cadavres dont la décomposition est incomplète peut être traumatisante pour la famille qui demande parfois l'exhumation ou même pour le personnel des pompes funèbres.

De manière plus prosaïque la très lente décomposition des corps engendre des manques de place dans les cimetières avec comme conséquence le rejet des demandes d'inhumation dans certaines villes. A titre d'exemple, pour illustrer le phénomène, la ville de Paris procède chaque année à environ 10 mille inhumations et 9 mille exhumations dont 1200 à la demande des familles.

### Résumé de l'invention

La présente invention concerne un cercueil, notamment pour l'inhumation en pleine terre comprenant un fond, des parois latérales, un couvercle, un matelas et des moyens de collecte aptes à réceptionner des fluides vitaux sous le matelas, caractérisé en ce que le cercueil comprend en outre des moyens de stockage d'oxygène permettant un apport d'oxygène dans le cercueil, des moyens d'humidification et des moyens de chauffage de manière à générer dans le temps des conditions permettant une décomposition rapide du corps.

### Avantages apportés

Un premier but de la présente invention est de résoudre tout ou partie des problèmes techniques liés à l'art antérieur précité.

La présente invention a pour but de pallier les inconvénients précités en proposant un cercueil permettant une décomposition rapide du corps et notamment inférieure à un an.

La présente invention a également pour but de proposer un cercueil permettant une décomposition rapide du corps sans intervention particulière des personnels des pompes funèbres une fois l'inhumation effectuée.

La présente invention a également pour but de proposer un cercueil permettant une décomposition rapide du corps quelle que soit l'influence du climat ou de la terre sur le cercueil.

La présente invention a également pour but de proposer un cercueil permettant une décomposition rapide du corps à partir de produits naturels compatibles avec les normes environnementales.

### Brève description des dessins

La présente invention sera mieux comprise à la lecture d'un exemple détaillé de réalisation en référence aux figures annexées, fournies à titre d'exemple non limitatif, parmi lesquels :
La figure 1 représente un exemple de réalisation schématique en perspective d'un cercueil conforme à l'invention,
La figure 2 représente le cercueil de la figure 1, en vue de coupe latérale.

### Description des modes de réalisation

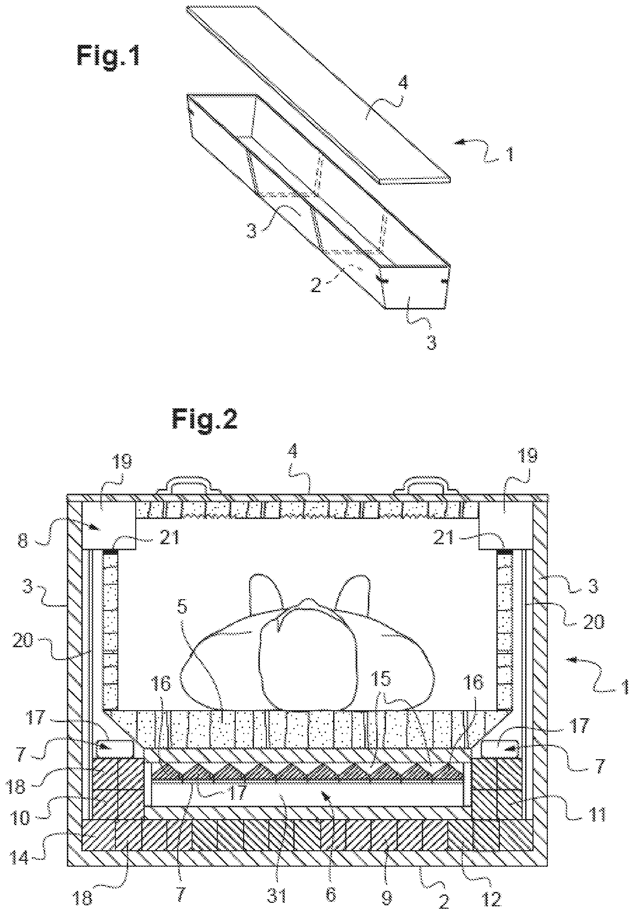

La présente invention vise à protéger un cercueil tel que représenté aux figures 1 et 2. En se reportant à la figure 1, on voit représenté un cercueil 1, notamment pour l'inhumation en pleine terre, conforme à l'invention. Ce dernier comprend, de manière connue, un fond 2, des parois latérales 3, un couvercle 4, un matelas 5 et des moyens de collecte 6 aptes à réceptionner des fluides vitaux sous le matelas 5.

Selon l'invention, le cercueil 1 comprend des moyens techniques permettant d'accélérer la décomposition du corps, à cet effet, le cercueil 1 est équipé en outre de moyens de stockage d'oxygène 7 permettant un apport d'oxygène dans le cercueil, des moyens d'humidification 8 et des moyens de chauffage 9. La combinaison et l'activation des moyens de stockage d'oxygène 7, des moyens d'humidification 8 et de chauffage 9 permettent de générer dans le temps des conditions permettant une décomposition rapide du corps.

A ce sujet, il est important de noter que les moyens de stockage pourront comprendre de l'oxygène pur ou un mélange comportant de l'oxygène et par exemple de l'air. L'objectif de cet apport d'oxygène est de stimuler les bactéries aérobies en augmentant le taux de l'oxygène dans le cercueil 1. Dans les cercueils actuels le taux d'oxygène est très bas compte tenu des gaz de décomposition provenant du corps et du non renouvellement de l'air, dans le cercueil fermé hermétiquement ce qui entraîne une disparition rapide des bactéries nécrophages aérobies.

En se reportant à la figure 2 illustrant une vue en coupe schématique du cercueil 1, on voit que le matelas 5 repose sur une plaque 10 à double paroi avec une paroi supérieure ajourée 11 laissant passer les fluides et une paroi inférieure 12 accueillant un bac de réception 13 des fluides, la double paroi 10 présente en outre une plaque intermédiaire 14 pentue pour le guidage des fluides vers le bac de réception 13.

Lorsque le corps laisse écouler ses fluides, ces derniers traversent le matelas 5 dont les composants filtrent en partie les fluides, puis s'écoulent ensuite à travers la paroi supérieure ajourée 11 et entrent en contact avec la plaque intermédiaire 14. Les fluides sont ensuite guidés le long de la pente et viennent remplir le bac de réception 13.

De manière avantageuse on prévoit des clapets anti-retours empêchant toute remontée du fluide en dehors du bac de réception 13.

Dans l'exemple des figures 1 et 2, la plaque intermédiaire 14 présentent un profilé ondulé avec des ondulations sensiblement en forme de W, toutefois d'autres formes sont également envisageables pour guider les fluides vers le bac 13 et par exemple une simple forme en V permettant de constituer une gouttière d'écoulement unique. L'avantage d'une plaque intermédiaire 14 à profil ondulé est notamment de prévoir alternativement des espaces d'écoulement 15 formant gouttière avec des espaces libres 16 permettant de recevoir partiellement les moyens de stockage d'oxygène 7 et/ou les moyens d'humidifications 8.

Entre le fond 2 du cercueil 1 et la plaque à double paroi 10 sont disposés avantageusement les moyens de chauffage. Ce positionnement permet de produire une chaleur efficace pour le chauffage du corps.

Selon un mode de réalisation avantageux, les moyens de stockage d'oxygène 7 comportent au moins une poche d'oxygène 17 réalisée dans un matériau hydrosoluble.

Comme indiqué plus haut la plaque 10 à double paroi permet en outre la réception d'au moins une partie des moyens de stockage d'oxygène 7 et des moyens d'humidification 8. Ainsi, les moyens de stockage d'oxygène 7 comportent au moins une poche d'oxygène 17 disposée dans la plaque à double paroi 10. D'autres emplacements des poches hydrosolubles 17 sont également envisageables et notamment au niveau des parois latérales 3 du cercueil 1. Avantageusement on prévoit de nombreuses poches 17 avec des résistances différentes de manière à permettre des ruptures successives et une alimentation en oxygène régulière du cercueil 1.

D'une manière avantageuse, les moyens de chauffage 9 comportent une couche de compost 18. Cette couche de compost 18 est avantageusement disposée sous la plaque à double paroi 10 et activable par imprégnation de liquide par l'intermédiaire des moyens d'humidification 8.

Les paramètres relatifs à la nature du compost et la quantité de compost sont importants puisque le compost doit permettre d'une part de générer une chaleur importante pour la destruction des pathogènes et d'autre part de générer une chaleur constante pour assurer un chauffage régulier au corps facilitant sa décomposition. On choisit notamment dans l'exemple un compost naturel permettant de créer une forte chaleur supérieure à 80°C à l'activation de manière à détruire les bactéries pathogènes présentes dans le cercueil. Ce compost présentera une masse à sec avantageusement comprise entre 5 et 25kg.

En se reportant à la figure 2 on voit que le cercueil 1 comprend des moyens d'humidification 8 avec un réservoir 19, avantageusement disposé au niveau du couvercle 4. Ce réservoir est apte à contenir des liquides, ces liquides étant destinés à augmenter le taux d'humidité dans le cercueil.

Les moyens d'humidification permettent également dans le cas de l'utilisation de moyens de chauffage à base de compost tels que décrits plus haut d'activer le compost 18.

Pour transférer les liquides on prévoit au moins une canalisation 20. Cette canalisation permet le transfert du liquide du réservoir 19 vers le fond 2 du cercueil 1. A cet effet on prévoit une vanne 21 entre le réservoir 19 et la canalisation 20 permettant un transfert contrôlé du liquide vers l'intérieur du cercueil.

Selon un premier aspect avantageux, la vanne 21 est une vanne bio dégradable ou putrescible permettant l'écoulement du liquide du réservoir dans la canalisation dans un délai déterminé, notamment compris entre 3 et 6 mois. Ce délai permet de réaliser une première décomposition du corps avec notamment l'évacuation des gaz et d'une partie des fluides du corps.

Selon un second aspect avantageux, la canalisation 20 permet de réaliser un goutte-à-goutte de manière à ne pas saturer d'humidité l'intérieur du cercueil 1 tout en approvisionnant régulièrement ce dernier.

Le réservoir 19 pourra être rempli par un employé des pompes funèbres avant la descente du cercueil en pleine terre ou éventuellement dans les régions humides pourra être rempli par les eaux de pluie à travers le couvercle 4 ce dernier pouvant être équipé d'ouverture filtrante laissant passer les liquides vers le réservoir 19.

De manière avantageuse, on prévoit que le fonds 2 et ou les parties latérales 3 présentent une zone de rupture, réalisée dans un matériau putrescible, de sorte que lorsque le cercueil est en partie ou en totalité inondé, notamment en cas de remontée de nappes phréatiques, cette zone de rupture permette l'écoulement des liquides hors du cercueil. De manière avantageuse, le matériau utilisé pour la réalisation de cette zone de rupture est un polymère biodégradable de type PLA ou de ses dérivés.

Le fonctionnement du cercueil tel que précité est le suivant : lorsque le corps est mis en bière et le cercueil inhumé, le corps se putréfie c'est-à-dire que ses tissus organiques sont détruits sous l'influence des bactéries essentiellement présentes dans la flore intestinale, des mycètes saprophytes et des autres bactéries qui envahissent le cadavre.

Dans une première phase, se déroulant de plusieurs semaines à plusieurs mois, les poches hydrosolubles 17 présentes dans le cercueil, se rompent au fur et à mesure de la décomposition sous l'effet de l'humidité augmentant le taux d'oxygène dans le cercueil 1 ce qui favorise et entretient l'activité des bactéries aérobies responsables de la décomposition des tissus.

Dans une seconde phase les moyens d'humidification provoquent, une fois la rupture de la vanne 21 et les liquides transférés par la canalisation 20, l'activation des moyens de chauffage 9 à savoir dans l'exemple le compost 18.

Le compost 18 va dans un premier temps relativement court dégager une chaleur importante, supérieure à 100 degrés, permettant de détruire les agents pathogènes présents et dans un second temps poursuivre le dégagement de chaleur à une température supérieure à 10 degrés, durant un temps de l'ordre de 4 à 6 mois, ce qui aura pour effet de chauffer le corps et améliorer sa décomposition.

Le cercueil 1 comporte ainsi des moyens techniques permettant de reconstituer des conditions de température, d'hygrométrie et de taux d'oxygène optimales pour la décomposition complète du corps.

Bien entendu, d'autres caractéristiques de l'invention auraient également pu être envisagées sans pour autant sortir du cadre de l'invention définie par les revendications ci-après.

## Revendications

1. Cercueil, notamment pour l'inhumation en pleine terre comprenant un fond (2), des parois latérales (3), un couvercle (4), un matelas (5) et des moyens de collecte (6) aptes à réceptionner des fluides vitaux sous le matelas, **caractérisé en ce que** le cercueil comprend en outre des moyens de stockage d'oxygène (7) permettant un apport d'oxygène dans le cercueil, des moyens d'humidification (8) et des moyens de chauffage (9) de manière à générer dans le temps des conditions permettant une décomposition rapide du corps.

2. Cercueil selon la revendication 1 dans lequel le matelas (5) repose sur une plaque à double paroi (10) avec une paroi supérieure (11) ajourée laissant passer les fluides et une paroi inférieure (12) accueillant un bac de réception (13) des fluides, la plaque à double paroi (10) présentant en outre une plaque intermédiaire (14) pentue pour le guidage des fluides vers le bac de réception (13).

3. Cercueil selon la revendication 2 dans lequel la plaque à double paroi (10) est ondulée et permet en outre la réception d'au moins une partie des moyens de stockage d'oxygène et/ou des moyens d'humidification au niveau d'espaces libres 16.

4. Cercueil selon l'une quelconque des revendications précédentes dans lequel les moyens de stockage d'oxygène comportent au moins une poche d'oxygène (17) réalisée dans un matériau hydrosoluble.

5. Cercueil selon la revendication 2 prise seule ou en combinaison avec la revendication 3 ou 4 dans lequel les moyens de stockage d'oxygène (7) comportent au moins une poche d'oxygène (17) disposée dans la plaque à double paroi (10).

6. Cercueil selon la revendication 2 prise seule ou en combinaison avec l'une quelconque des revendications 3 à 5 dans lequel les moyens de chauffage (9) comportent une couche de compost (18), disposée sous la plaque à double paroi (10), activable par imprégnation de liquide par l'intermédiaire des moyens d'humidification (8).

7. Cercueil selon la revendication 4 dans lequel le compost (18) est un compost naturel permettant de créer une forte chaleur supérieure à 80°C à l'activation de manière à détruire les bactéries pathogènes présentes dans le cercueil.

8. Cercueil selon l'une quelconque des revendications précédentes dans lequel les moyens d'humidification (8) comportent un réservoir (19) sur le couvercle apte à contenir des liquides, au moins une canalisation (20) permettant le transfert du liquide vers le fond du cercueil et une vanne (21) entre le réservoir et la canalisation permettant un transfert contrôlé du liquide vers l'intérieur du cercueil.

9. Cercueil selon la revendication 8 dans lequel la vanne (21) est une vanne bio dégradable ou putrescible permettant l'écoulement du liquide du réservoir (19) dans la canalisation (20) dans un délai déterminé, notamment compris entre 3 et 6 mois.

10. Cercueil selon l'une quelconque des revendications précédentes dans lequel le fonds (2) et/ou les parties latérales (3) présentent une zone de rupture, réalisée dans un matériau putrescible, permettant l'écoulement des liquides hors du cercueil, le matériau utilisé pour la réalisation de cette zone de rupture est un polymère biodégradable de type PLA ou de ses dérivés.

11. Cercueil selon l'une quelconque des revendications précédentes dans lequel des clapets anti-retours empêchant toute remontée du fluide en dehors du bac de réception (13).

## Patentansprüche

1. Sarg, insbesondere zur Erdbestattung, umfassend einen Boden (2), Seitenwände (3), einen Deckel (4), eine Matte (5), und Sammelmittel (6), die geeignet sind, Lebenssäfte unter der Matte aufzunehmen, **dadurch gekennzeichnet, dass** der Sarg weiter Sauerstoffspeichermittel (7), die einen Eintrag von Sauerstoff in den Sarg ermöglichen, Befeuchtungsmittel (8), und Heizmittel (9) umfasst, um im Laufe der Zeit Bedingungen zu erzeugen, die eine schnelle Zersetzung des Körpers ermöglichen.

2. Sarg nach Anspruch 1, wobei die Matte (5) auf einer doppelwandigen Platte (10) mit einer durchbrochenen oberen Wand (11), die die Säfte durchtreten lässt, und einer unteren Wand (12), die eine Wanne (13) zum Aufnehmen der Säfte beherbergt, aufliegt, wobei die doppelwandige Platte (10) weiter eine schrägstehende Zwischenplatte (14) zum Leiten der Säfte zur Aufnahmewanne (13) aufweist.

3. Sarg nach Anspruch 2, wobei die doppelwandige Platte (10) gewellt ist und weiter das Aufnehmen mindestens eines Teils der Sauerstoffspeichermittel und/oder der Befeuchtungsmittel im Bereich von Freiräumen (16) ermöglicht.

4. Sarg nach einem der vorstehenden Ansprüche, wobei die Sauerstoffspeichermittel mindestens eine Sauerstofftasche (17) umfassen, die aus einem wasserlöslichen Material hergestellt ist.

5. Sarg nach Anspruch 2 alleine oder in Kombination mit Anspruch 3 oder 4, wobei die Sauerstoffspeichermittel (7) mindestens eine Sauerstofftasche (17) umfassen, die in der doppelwandigen Platte (10) angeordnet ist.

6. Sarg nach Anspruch 2 alleine oder in Kombination mit einem der Ansprüche 3 bis 5, wobei die Heizmittel (9) eine unter der doppelwandigen Platte (10) angeordnete Schicht aus Kompost (18) umfassen, der durch Tränken mit Flüssigkeit mithilfe der Befeuchtungsmittel (8) aktiviert werden kann.

7. Sarg nach Anspruch 4, wobei es sich bei dem Kompost (18) um einen natürlichen Kompost handelt, der es ermöglicht, bei Aktivierung eine starke Hitze von mehr als 80 °C zu erzeugen, um die krankheitserregenden Bakterien, die im Sarg vorhanden sind, zu vernichten.

8. Sarg nach einem der vorstehenden Ansprüche, wobei die Befeuchtungsmittel (8) einen Behälter (19) am Deckel umfassen, der geeignet ist, Flüssigkeiten zu enthalten, wobei mindestens eine Kanalleitung (20) den Transfer der Flüssigkeit zum Boden des Sarges ermöglicht, und wobei ein Ventil (21) zwischen dem Behälter und der Kanalleitung einen kontrollierten Transfer der Flüssigkeit zum Inneren des Sarges ermöglicht.

9. Sarg nach Anspruch 8, wobei es sich bei dem Ventil (21) um ein biologisch abbaubares oder verrottbares Ventil handelt, das das Ablaufen der Flüssigkeit aus dem Behälter (19) in einem bestimmten Zeitraum, insbesondere im Bereich zwischen 3 und 6 Monaten, in die Kanalleitung (20) ermöglicht.

10. Sarg nach einem der vorstehenden Ansprüche, wobei der Boden (2) und/oder die Seitenteile (3) eine aus einem verrottbaren Material hergestellte Sollbruchzone aufweisen, die das Ablaufen der Flüssigkeiten aus dem Sarg ermöglicht, wobei es sich bei dem für die Herstellung dieser Sollbruchzone verwendeten Material um ein biologisch abbaubares Polymer vom Typ PLA oder dessen Derivate handelt.

11. Sarg nach einem der vorstehenden Ansprüche, wobei Rückschlagklappen jeden Aufstieg des Saftes aus der Aufnahmewanne (13) heraus verhindern.

## Claims

1. A coffin, especially for in-ground burial, comprising a bottom (2), side walls (3), a lid (4), a mattress (5) and collection means (6) capable of receiving vital fluids under the mattress, **characterised in that** the coffin further comprises oxygen storage means (7) for supplying oxygen to the coffin, humidifying means (8) and heating means (9) so as to generate conditions for rapid decomposition of the body over time.

2. The coffin according to claim 1 wherein the mattress (5) rests on a double-walled plate (10) with a perforated upper wall (11) through which fluids can pass and a lower wall (12) which accommodates a fluid receiving trough (13), the double-walled plate (10) furthermore having a sloping intermediate plate (14) for guiding the fluids to the receiving trough (13).

3. The coffin according to claim 2 wherein the double-walled plate (10) is corrugated and further allows the reception of at least part of the oxygen storage means and/or the humidification means at free spaces (16).

4. The coffin according to any of the preceding claims wherein the oxygen storage means include at least one oxygen bag (17) made of a water-soluble material.

5. The coffin according to claim 2 taken alone or in combination with claim 3 or 4 wherein the oxygen storage means (7) includes at least one oxygen bag (17) disposed in the double-walled plate (10).

6. The coffin according to claim 2 taken alone or in combination with any of claims 3 to 5 wherein the heating means (9) include a layer of compost (18), disposed beneath the double-walled plate (10), activatable by impregnation with liquid via the humidifying means (8).

7. The coffin according to claim 4 wherein the compost (18) is a natural compost capable of creating high heat in excess of 80°C upon activation so as to destroy pathogenic bacteria present in the coffin.

8. The coffin according to any of the preceding claims wherein the humidifying means (8) include a reservoir (19) on the lid capable of containing liquids, at least one pipe (20) for transferring the liquid to the bottom of the coffin and a valve (21) between the reservoir and the pipe for controlled transfer of liquid to the interior of the coffin.

9. The coffin of claim 8 wherein the valve (21) is a biodegradable or putrescible valve allowing the liquid to flow from the reservoir (19) into the pipe (20) within a specified time, especially between 3 and 6 months.

10. The coffin according to any of the preceding claims, wherein the bottom (2) and/or the side parts (3) have a rupture zone, made of a putrescible material, allowing the flow of liquids out of the coffin, the material used for making this rupture zone is a biodegradable polymer of the PLA type or derivatives thereof.

11. The coffin according to any of the preceding claims, wherein non-return valves prevent any fluid backflow out of the receiving tray (13).
